# EUROPEAN PATENT APPLICATION

(11) **EP 4 561 084 A1**
(43) Date of publication of application: **28.05.2025**
(21) Application number: 23841990.7
(22) Date of filing: 19.06.2023
(51) Int. Cl.: H04N 23/60

(54) **VIDEO PROCESSING METHOD AND APPARATUS, AND ELECTRONIC DEVICE AND STORAGE MEDIUM**

(30) Priority: 20.07.2022 CN 202210862523
(71) Applicant: Beijing Zitiao Network Technology Co., Ltd., Beijing 100190 (CN)
(72) Inventor: ZHAO, Shuanglin, Beijing 100028 (CN); YANG, Qiyue, Beijing 100028 (CN); GAO, Jing, Beijing 100028 (CN); ZHOU, Xubin, Beijing 100028 (CN)
(74) Representative: Dentons UK and Middle East LLP
(86) International application number: PCT/CN2023/101016
(87) International publication number: WO 2024/016924

(57) **Abstract**

Embodiments of the present disclosure provide a method and apparatus for video processing, an electronic device and a storage medium. The method includes: sequentially collecting to-be-processed video frames in response to an effect triggering operation; in response to detecting a contact on a display interface, determining target display positions of the contact in the to-be-processed video frames, and adding a target control object at the target display positions; in response to detecting that an effect play condition is satisfied, sequentially determining presentation forms for the target control object; and controlling the target control object to be presented in the to-be-processed video frames based on corresponding presentation forms.

## Description

This application claims priority to Chinese Patent Application No. 2022108625231, filed Jul. 20,2022, the entire content of which is incorporated herein by reference.

### FIELD

Embodiments of the present disclosure relate to the field of image processing technologies, and in particular, to a method and apparatus for video processing, an electronic device, and a storage medium.

### BACKGROUND

With the development of network technologies, more and more applications have entered the lives of users, for example, a series of software capable of shooting short videos, which are very popular among users.

**In** order to improve fun of video shooting, software developers can develop a variety of effect props, however, effect props provided for the user are very limited, and richness of the video content needs to be further improved. For example, in the field of augmented reality (AR), the effect of effect video generated based on the related effect prop is poor, and meanwhile, the interactivity between the users is not strong, thereby causing the problem of poor user experience.

### SUMMARY

The present disclosure provides a method and an apparatus for video processing, an electronic device and a storage medium, so that the technical effect of improving interactivity between effect video content and a user is achieved.

The embodiment of the present disclosure provides a method for video processing, and the method includes: in response to an effect triggering operation, sequentially collecting to-be-processed video frames; in response to detecting a contact on a display interface, determining target display positions of the contact in the to-be-processed video frames, and adding a target control object at the target display positions; in response to detecting that an effect play condition is satisfied, sequentially determining presentation forms for the target control object; and controlling the target control object to be presented in the to-be-processed video frames based on corresponding presentation forms.

The embodiment of the present disclosure further provides an apparatus for video processing, and the apparatus includes a video frame collecting module, configured to sequentially collect to-be-processed video frames in response to an effect triggering operation; an object adding module, configured to determine, in response to detecting a contact on a display interface, target display positions of the contact in the to-be-processed video frames, and add a target control object at the target display positions; a presentation form determining module, configured to sequentially determine presentation forms for the target control object in response to detecting that an effect play condition is satisfied; and an effect presenting module, configured to control the target control object to be presented in the to-be-processed video frames based on corresponding presentation forms.

**An** embodiment of the present disclosure further provides an electronic device, including: at least one processor; and a storage device, configured to store at least one program, when executed by the at least one processor, the at least one program causes the at least one processor to implement the method for video processing according to any one of the embodiments of the present disclosure.

An embodiment of the present disclosure further provides a storage medium including computer executable instructions that, when executed by a computer processor, are configured to implement the method for video processing according to any one of the embodiments of the present disclosure.

### BRIEF DESCRIPTION OF DRAWINGS

FIG. 1 is a schematic flowchart illustrating a method for video processing provided by an embodiment of the present disclosure;
FIG. 2 is a schematic flowchart illustrating a method for video processing provided by an embodiment of the present disclosure;
FIG. 3 is a schematic structural diagram illustrating an apparatus for video processing provided by an embodiment of the present disclosure;
FIG. 4 is a schematic structural diagram of an electronic device provided by an embodiment of the present disclosure.

### DETAILED DESCRIPTION

Embodiments of the present disclosure will be described below with reference to the accompanying drawings. While some embodiments of the present disclosure are shown in the drawings, it shall be understood that the present disclosure may be implemented in a variety of forms and should not be construed as limited to the embodiments set forth herein.

It shall be understood that the various steps described in the method implementation of this disclosure can be executed in different orders and/or in parallel. In addition, the method implementation can include additional steps and/or the steps as shown may be omitted.

The term "comprising" and its variations as used herein are non-exclusive inclusion, i.e. "including but not limited to". The term "based on" means "at least partially based on". The term "one embodiment" means "at least one embodiment"; the term "another embodiment" means "at least one additional embodiment"; and the term "some embodiments" means "at least some embodiments". Relevant definitions of other terms will be given in the following description.

It should be noted that the concepts of "first" and "second" mentioned in this disclosure are only used to distinguish different devices, modules, or units, but are not used to limit the order or interdependence of the functions performed by these devices, modules, or units.

It should be noted that the modifications of "one" and " a plurality of " mentioned in this disclosure are illustrative but not limiting. Those skilled in the art should understand that unless otherwise indicated in the context, they should be understood as "one or more".

The names of messages or information interacted between multiple devices in embodiments of the present disclosure are for illustrative purposes only.

**It** will be appreciated that, before using the technical solutions disclosed in the various embodiments of the present disclosure, the user shall be informed of the type, usage scope, and usage scenario of the personal information involved in this disclosure in an appropriate manner and the user's authorization shall be obtained, in accordance with relevant laws and regulations.

For example, in response to receiving an active request from a user, a prompt message is sent to the user to explicitly prompt the user that the operation requested to be performed will require acquiring and using personal information of the user. Thus, the user can autonomously select whether to provide personal information to software or hardware such as electronic devices, applications, servers, or storage media that perform operations of the disclosed technical solution, based on the prompt message.

As an optional but non-limiting implementation, in response to receiving an active request from the user, prompt information is sent to the user, for example, in the form of a pop-up window, and the pop-up window may present the prompt information in the form of text. In addition, the pop-up window may also carry a selection control for the user to select whether he/she "agrees" or "disagrees" to provide personal information to the electronic device.

**It** may be understood that the above notification and user authorization process are only illustrative, which do not limit the implementation of this disclosure. Other methods that meet relevant laws and regulations can also be applied to the implementation of this disclosure.

**It** may be understood that the data involved in the technical solution (including but not limited to the data itself, the acquisition or use of the data) should follow the requirements of the corresponding laws and regulations and related regulations.

Before introducing this technical solution, the application scenario may be illustratively described first. The technical solution provided by the embodiment of the present disclosure can be applied to any scenario that requires to generate the effect video, for example, in a scenario generated by the AR effect video, interactivity between the user and the display interface can be increased, and the personalization of effect video and interactivity between the users are improved. It may also be a scenario in which any effect video in the related art is generated, and an effect video regarding bone plates or any blocky objects being continuously pushed down in the scenario may be simulated.

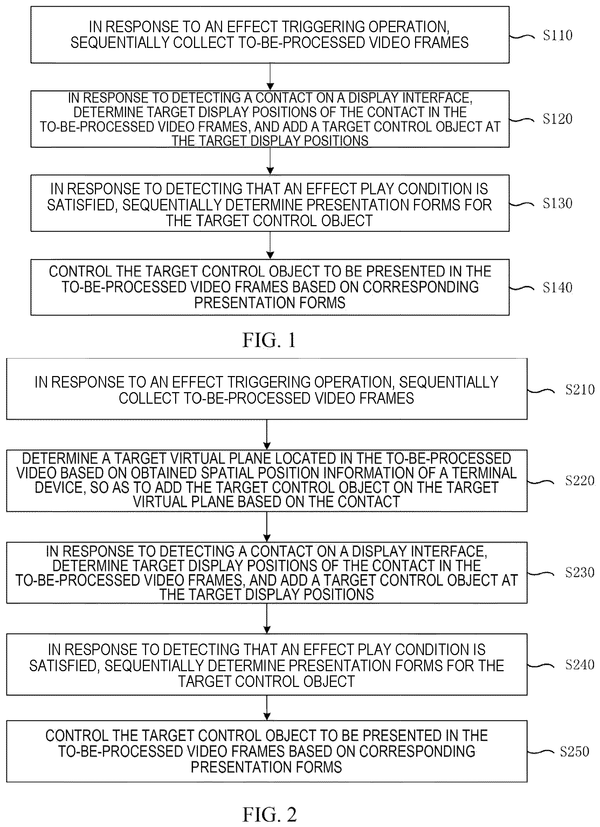

FIG. 1 is a schematic flowchart illustrating a video processing method according to an embodiment of the present disclosure, which may be applicable to a case in which the user utilizes effect props to generate a corresponding effect video. The method may be performed by an apparatus for video processing, and the apparatus may be realized in the form of software and/or hardware. The hardware may be an electronic device, such as a mobile terminal, a personal computer (PC) terminal or a server. The scenario presented by the effect video is usually implemented by cooperation of a client and a server, and the method provided in this embodiment may be performed by a server, a client, or a cooperation between a client and a server.

As shown in FIG. 1, the method includes the following steps.

**In** step S110, to-be-processed video frames are sequentially collected in response to an effect triggering operation.

The apparatus for executing the method for effect video processing provided by the embodiments of the present disclosure may be integrated into application software that supports effect video processing functions, and the software may be installed in the electronic device. Optionally, the electronic device may be a mobile terminal or a PC terminal. The application software may be a type of software for image/video processing, which will not described in detail herein, as long as image/video processing can be implemented. It may also be a specially developed application for realizing addition of effects and display of the effects in the software, or it may be integrated in a corresponding page, so that the user can process the effect video through the page integrated in the PC terminal.

**In** this embodiment, in the application software or application program that supports the effect video processing function, the control for triggering the effect may be developed in advance, and when it is detected that the user triggers the control, the effect triggering operation may be responded, so as to start to collect the to-be-processed video frames of the scene to which the terminal device belongs. That is, effect props corresponding to the embodiment of the present disclosure may be created, and when it is detected that the effect prop is triggered, the to-be-processed video frame may be collected.

After the user trigger a corresponding effect prop, the camera device may be used to collect the to-be-processed video frames based on the camera device. That is, the to-be-processed video frames are shoot based on the camera device.

In S120, when a contact of the display interface is detected, a target display position of the contact in the to-be-processed video frames are determined, and a target control object is added at the target display position.

The contact may be a touch point determined in the display interface and configured to place the target control object after the user triggers an effect in the application software, and the touch point is also a key point associated with a feature of the user himself/herself, for example, the key point may be a nose tip. The current position information of the contact is data determined by the application software or application regarding the position of the contact in the display interface, for example, two-dimensional coordinates of the contact in the display interface.

Optionally, for a triggered effect, the user may determine, using a feature (for example, a nose) of the face, a contact for adding the target control object in the display interface. In a subsequent process, the user may also move in the display interface based on a facial feature as the contact, so as to determine a target display position of the contact in the display interface; or, the user may determine, by a touching operation of a finger on the display interface, a target display position for placing the target control object in the display interface, and then place a corresponding target control object at the target display position.

The target control object may be understood as an object placed at a touch point, for example, may be a blocky object, such as a bone plate.

When it is detected that the display interface includes a contact, the target display position of the contact in the to-be-processed video frame is determined, and the target control object is added at the target display position.

In this embodiment, determining the target display position of the contact in the to-be-processed video frame includes: when detecting a triggering operation on the display interface, determining the contact; and determining the target display position based on the contact.

The triggering operation may be a triggering operation of the finger on the display interface, or a stop point of the key point on the display interface. The target display position may be a position where the target control object is placed in the AR scene.

For example, a nose of a user is predetermined as the target key point, based on this, when the user collect a face image through a front camera of a mobile device, a feature in the face image may be identified based on a pre-trained face recognition algorithm, when a nose that may be used as the target key point is identified in the face image, residence duration of the feature in the display interface may be tracked, and if the residence duration reaches a predetermined residence duration threshold, optionally, 200 ms, the coordinates of the feature in the display interface may be used as the target display position. The triggering operation of the touch point on the display interface may be detected, optionally, pressure values corresponding to a plurality of positions on the display interface are detected, a position corresponding to a pressure value greater than a predetermined pressure value threshold is used as the touch point, and the position is used as the target display position.

**It** may be understood that, the user may click the display interface according to actual requirements to determine the target display position of the touch point in the to-be-processed video frames on the clicked display interface, and place the predetermined target control object in the target display position. If there are a plurality of touch points, it indicates that there are a plurality of target control objects as well.

**In** step S130, presentation forms for the target control object are determined sequentially when detecting that an effect play condition is satisfied.

The effect play condition may be understood as a condition for animation play for at least one target control object on which placement control needs to be performed. The presentation form may include an upright state or a tiled state of the target control object. When the target control object is placed based on the target display position, the state corresponding to the target control object is used as an upright state, and the tiled state is a state different from the upright state.

It may be understood that, when it is detected that the effect play condition is met, the presentation forms for the target control object may be sequentially determined, so that after the presentation forms for the target control object are determined, the target control object is controlled to be presented according to corresponding presentation forms sequentially.

**It** should be noted that the presentation forms for the target control object are determined sequentially, and the presentation forms may be determined according to the presentation position of the target control object in the display interface. Such as, sequence information of the presentation forms for the target control object may be determined by combining the coordinate information of the target control object in the display interface. Alternatively, sequence information of the presentation forms for the target control object may be determined according to placement timestamp of the target control object in the display interface, thereby determining the presentation forms fo the corresponding target control object.

In the embodiment of the present disclosure, the effect play condition may be: a duration for adding the target control object reaching a second predetermined duration; a control indicating that addition of the target control object is completed being triggered.

It may be understood that a duration threshold for adding the target control object may be predetermined, optionally, 30s, 1 min, or the like, and the duration threshold may be used as the second predetermined duration. In a process of collecting the to-be-processed video frame, the countdown module may be started to add the target control object to the to-be-processed video frames within the second predetermined duration. When the countdown is 0, it indicates that the target control object has been added, and the target control object may be controlled to perform effect presentation according to the determined presentation forms. In another manner, the user may add the target control object to the to-be-processed video frames according to actual requirements, and after the addition is completed, the completion control on the display interface may be triggered, so that when triggering of the completion control is detected, it is determined that the target control object has been added, and the target control object may be controlled to be presented according to the determined presentation forms, thereby obtaining an effect video.

In this way, placement of the articles can be carried out in limited time, or the user is given sufficient time for placing the objects, so that the effect of controlling the time length for placing the articles in the actual scene is achieved.

It shall be further noted that, when a target control object is added to the to-be-processed video frames, the target control object may be used as foreground information, and the to-be-processed video frames collected sequentially may be used as background information to obtain the final effect video.

At S140, the target control object is controlled to be presented in the to-be-processed video frames according to the corresponding presentation forms.

It may be understood that, when determining the presentation forms corresponding to the corresponding target control object, the corresponding target control object may be presented according to the determined presentation forms.

Exemplarily, the target control object is a group of blocks or a bone plate placed in a regular or random manner, when it is detected that the effect play condition is met, the presentation forms for the blocks may be determined starting from the first block, optionally, if the presentation form is a tiled form, the first block is controlled to be adjusted from the upright state to the tiled state, then the presentation forms for the second block are determined, and so on, then, the effect video is obtained, thereby the effect of displaying domino bone plates in a scene is simulated. Of course, if presentation forms for the first block are in an upright state, it is determined that the first block does not have a corresponding influence on the second block, and all subsequent blocks are in the upright state. Of course, if the initial block is not starting from the first block, but starts from the nth building block, the presentation forms for the nth building block can be determined, and the presentation forms for the *n+1* th and *n+2* th···blocks are determined according to the presentation forms of the nth block until the last block.

According to the technical solution provided by the embodiment of the present disclosure, the to-be-processed video frame is sequentially collected in response to the effect triggering operation; and when it is detected that the user triggers the display interface, the target display position of the contact in the to-be-processed video frame can be determined, the target control object is added at the target display position. When it is detected that the effect play condition is satisfied, the presentation forms for the target control object can be determined sequentially, and the target control object is controlled to be presented in the to-be-processed video frames according to the corresponding presentation forms, thus the placement position of the target control object can be determined based on the triggering operation from the user, that is, the effect of interactivity between the user and the display interface is achieved. Further, on the basis of satisfying the effect play condition, the target control object can be controlled to be presented according to the corresponding presentation forms sequentially, and richness of the picture content is improved.

FIG. 2 is a schematic flowchart illustrating a method for video processing according to an embodiment of the present disclosure. Based on the foregoing embodiments, effect interaction can be realized not only in ordinary videos, but also in AR scenes. For example, when collecting to-be-processed video frames, a target virtual plane in the to-be-processed video frames is determined, to add the target control object to the same target virtual plane based on the touch point, so as to realize an effect of fusing the target control object with the to-be-processed video frames. For the implementation thereof, the embodiments of the present disclosure may be referred to, wherein technical terms that are the same as or corresponding to the above embodiments are not repeated herein.

As shown in FIG. 2, the method includes the following steps.

At step S210, a to-be-processed video frame is sequentially collected in response to an effect triggering operation.

**It** may be understood that, when detecting a control corresponding to the effect prop being triggered, the to-be-processed video frames may be sequentially collected. Alternatively, after detecting that a start control is triggered, the to-be-processed video frames may be sequentially collected.

**In** this embodiment, the method further includes: in a process of sequentially collecting the to-be-processed video frames, displaying at least one to-be-selected trajectory; and determining a to-be-selected trajectory that is finally triggered within a first predetermined duration as a target trajectory, and presenting a guidance map corresponding to the target trajectory on the display interface to determine a target display position of the target control object based on the guidance map; or in response to that the at least one to-be-selected trajectory is not triggered within the first predetermined duration, removing the at least one to-be-selected trajectory from the to-be-processed video frames.

There may be one or more to-be-selected trajectories, and each to-be-selected trajectory may exhibit a presentation effect of an associated pattern. After the user triggers an effect, the application may display a to-be-selected track 1 of a corresponding text pattern and a to-be-selected track 2 of a corresponding image pattern in the related display interface. In this embodiment, while the to-be-selected trajectory associated with the effect is provided to the user, a template selection countdown is also presented in the display interface, and the countdown time is a predetermined selection duration. It may be understood that the user may perform selection on the plurality of to-be-selected trajectory templates by a triggering operation, and when the selection duration reaches the first predetermined duration, that is, when the template selection countdown is zero, the to-be-selected trajectory selected by the user at the moment is the target trajectory. Certainly, when the predetermined duration is not reached, the user may also send a confirmation instruction based on a determination control, so as to directly end the timing process of the template selection countdown, and use the to-be-selected trajectory currently selected as the target trajectory. Those skilled in the art should understand that, on the one hand, when there are a plurality of templates for the to-be-selected trajectory, the user may select the plurality of templates sequentially according to the intention of the user, but after the selected time reaches a predetermined duration, the application only uses the to-be-selected trajectory finally selected by the user as the target trajectory; on the other hand, the manner of determining the target trajectory may be selected according to actual conditions, which is not limited herein. Setting at least one to-be-selected trajectory can guide the user to place the content with more graphic sense, which further improves interactivity between the user and the display interface.

Of course, if no to-be-selected trajectory is selected within the first predetermined duration, it indicates that the user needs to present aarticle in conjunction with the trajectory, and at this time, the to-be-selected trajectory may be removed from the to-be-processed video frames, so that the user can determine the placement position of the target control object according to the his/her play.

**If** the user selects a target trajectory, a guidance map corresponding to the target trajectory may be displayed.

The guidance map is a guidance map for guiding a user and helping the user to place the corresponding target control object. The guidance map may be presented on the display interface in a form of a dotted line, and a corresponding arrow may be provided on the guidance map to guide the user to place the corresponding target control object based on the arrow.

**It** should be noted that, in this embodiment, a bottom strategy is also pre-deployed for the case where the user does not perform selection. If no to-be-selected trajectory is selected within the predetermined duration, the to-be-selected trajectory is removed from the to-be-processed video frame. It may be understood that, if the user does not select any to-be-selected trajectory within the predetermined duration, the to-be-selected trajectory in the display interface may be cleared, in this case, the user may place the target control object in any shape in the to-be-processed video frames according to his/her own intention.

At S220, a target virtual plane located in the to-be-processed video is determined based on the obtained spatial position information of a terminal device, so as to add a target control object to the target virtual plane based on the contact.

The terminal device is a device for collecting to-be-processed video frames. The spatial position information may be position information in a world coordinate system. The gyroscope and/or the inertial measurement unit disposed in the terminal device may determine angle information of a plurality of planes constitute by the target terminal device and the coordinate axis in the world coordinate system. A virtual plane corresponding to the terminal device is determined based on the spatial location information and the angle information of the terminal device, and the virtual plane is used as the target virtual plane.

When it is detected that there is a contact on the display interface, the target control object may be placed on the target virtual planes according to the display positions of the contact in the to-be-processed video frames. In this way, all target control objects can be adjusted to be located on the same horizontal plane, so that the sequence information of the target control objects is determined, and then the presentation forms corresponding to the target control object is determined according to the sequence information.

At S230, when detecting a contact on a display interface, target display positions of the contact is determined in the to-be-processed video frames, and the target control object is added at the target display positions.

**It** may be understood that the user may trigger any position on the display interface, and use the trigger point as a contact. The target display position of the contact in the target virtual plane of the to-be-processed video frames may be determined, to add the target control object at the display positions. There are many touch points, and the number of target control objects correspond to the number of touch points, that is, the number of touch points is consistent with the number of target control points.

**In** practical applications, there may be a problem that the placement position of the target control object is inconsistent with an actual requirement, in order to solve the problem, a withdrawal function may be provided to remove the target control object from the to-be-processed video frames based on the withdrawal function.

Optionally, when it is detected that the triggering operation on the target control object satisfies a withdrawal condition, the target control object is removed from the to-be-processed video frames, where the withdrawal condition includes at least one of an operation of clicking a withdrawal control, an operation of double-clicking the target control object, or an operation of long pressing the target control object.

**It** may be understood that the triggering operation on the target control object may be detected in real time, and if the triggering operation on the target object satisfies an object withdrawal condition, the corresponding target control object may be removed from the to-be-processed video frames.

**In** the embodiment of the present disclosure, the withdrawal condition may be that the display interface includes a control corresponding to the withdrawal function, and after detecting that addition of the target control object is completed, the withdrawal control is triggered, and the target control object added immediately before is removed from the to-be-processed video frames. If the withdrawal control is clicked continuously, corresponding target control objects may be sequentially withdrawn according to the timestamps for adding the target control objects. The target control objects just triggered may be removed from the to-be-processed video frames when detecting that the withdrawal control is triggered after triggering the target control object. Alternatively, when it is detected that the target control object is double-clicked or a duration for triggering the target control object reaches a corresponding predetermined pressing duration, it indicates that the target control object triggered at this time is removed from the to-be-processed video frames. In this way, the corresponding target control object can be set according to actual requirements, and the interactivity with the display interface is improved.

At S240, in response to detecting that an effect play condition is satisfied, the presentation forms for the target control object are sequentially determined.

**In** the embodiment of the present disclosure, the method may include: before sequentially determining the presentation forms for the target control object, determining a predetermined motion attribute corresponding to the target control object, so as to sequentially determine the presentation forms for the target control object based on the motion attribute; or determining a sliding operation on the display interface, and determining a motion direction for the target control object based on the sliding operation, so as to sequentially determine the presentation forms for the target control object based on the motion direction.

The motion attribute may be understood as: there are at least two implementations for determining the presentation forms for the target control object, the first implementation is determining the presentation forms based on a predetermined motion attribute, and the second implementation is determining the presentation forms of the plurality of target control objects based on a triggering operation of the user on the display interface.

The following separately describes how the presentation forms are determined in two implementations.

The motion attribute may be a motion direction corresponding to a series of target control objects in the development stage and an initial motion speed of the first target control object at the start position. The presentation forms include an upright form or a tiled form. When the corresponding target control objects are placed at all the target display positions, the initial states of all the target control objects are in an upright form.

**It** may be understood that, when it is detected that the effect play condition is satisfied, a starting target control object in all the target control objects may be determined. It may be determined that a presentation form for the starting target control object is converted from an upright state to a tiled state based on a predetermined initial motion speed and a predetermined motion direction. Next, a presentation form for the second target control object is determined, in this case, the presentation form for the second target control object may be determined based on the existing momentum conservation or energy conservation, and the spacing information between the first target control object and the second target control object. Correspondingly, the presentation form for the third target control object is associated with the presentation form for the second target control object, that is, the presentation form for the next target control object may be determined according to the presentation form for the previous target control object.

**In** this way, the effect of presenting the bone plates sequentially falling in an environment can be simulated.

**In** order to further improve the interactivity between the user and the display interface, the presentation form for the corresponding target control object may be determined based on the sliding operation of the user on the display interface.

The sliding operation may be a sliding of the finger on the display interface. For example, sliding toward the left, sliding toward the right, etc.

When it is detected that the effect play condition is satisfied and a sliding operation on the display interface is detected, the sliding direction corresponding to the sliding operation is determined, and the initial speed corresponding to the sliding operation is determined according to the ending point corresponding to the sliding operation. A first target control object is determined from the plurality of target control objects based on the sliding direction. Based on the first target control object, the sliding direction and the initial velocity, presentation forms corresponding to the plurality of target control objects are determined sequentially, and for the determination manner, the above description may be referred to, and details are not described herein again.

For example, if the corresponding sliding operation is a sliding operation towards the left, it is determined that the sliding direction is the left side, and at this time, the target control object located at the rightmost side in the to-be-processed video frame may be used as the first target operation object. In this case, the movement speed of the first target control object is consistent with the speed when the sliding operation ends, the sliding direction is the direction of leftward movement, and based on this, the presentation forms for all the target control object may be determined sequentially.

**In** this embodiment, the initial control object is determined, the following effect is simulatd: an article is triggered in the real environment, the article may be taken as the start control point, and subsequent ariticles may be controlled sequentially to fall down in sequence, thereby improving the effect of realism of the effect video content.

**In** practical applications, there may be a case that any one of all target control object is triggered by the user, in order to simulate the effect at this moment, a target control object corresponding to the sliding operation may be determined, and the target control object is used as the starting control object for sequentially determining the plurality of target control object.

The starting control object may be understood as a first object whose presentation form needs to be determined.

**It** may be understood that the target control object corresponding to the sliding operation may be used as the starting control object, and the presentation forms corresponding to respective target control objects may be determined sequentially according to the initial velocity and the sliding direction corresponding to the sliding operation.

**It** should be determined that, after determining the starting control object, the presentation forms corresponding to respective target control objects may be determined based on a physical engine, and then the target control object is controlled to be presented according to the corresponding presentation forms. In this embodiment, determining the presentation forms for respective target control objects based on the physical engine may be: if the target control object is the starting control object, determining motion information and presentation forms for the target control object based on a sliding operation on the starting control object; and determining, based on movement information and a movement direction of the target control object, motion information and presentation forms for a next target control object adjacent to the target control object, wherein the motion information includes the motion speed, and the presentation forms includes an upright state or a tiled state.

**It** may be understood that, the starting control object is determined based on a physical engine, and the initial speed and the sliding direction (the motion direction) are determined according to a sliding operation on the starting control object, to determine the presentation form of the starting control object, and control the starting control object to be presented according to the presentation form thereof. Next, the next target control object is determined according to the sliding direction, the presentation forms for the next target control object is determined according to the spacing information of the next target control object from the starting control object, the quality information of the starting control object and corresponding motion information when the presentation form for the starting control object is in a tilted state, the next target control object is controlled to be presented according to the presentation forms determined at this time, and so on, so that the presentation forms for the plurality of target control objects are determined. According to the method, the presentation forms for corresponding target control objects are determined, the effect of a plurality of bone plates continuously falling in the real environment can be simulated, the interactivity between the display interface and the user is improved, thereby improving the effect of realism of the display screen.

**It** should be noted that, if the spacing information between the initial control object and the next target control object is greater than the height information of the target control object itself, regardless of the corresponding motion speed when the starting control object is converted to the tiled state, the motion speed of the presentation form corresponding to the next target control object is zero, the presentation form is an upright state, and the plurality of target control objects after the next target control object are placed in a state in consistent with the initial placement state.

**It** should be further noted that, if distance information between the multiple target control object is not considered, the presentation forms for the next target control object may be determined only in combination with the motion speed of the previous target control object.

At S250, the target control object is controlled to be presented in the to-be-processed video frames according to the corresponding presentation form.

**It** may be understood that, in a process of presenting the target control object according to corresponding presentation forms, the to-be-processed video frames is presented as background information.

According to the technical solution provided by the embodiment of the present disclosure, when the to-be-processed video frames are collected, the target virtual plane can be determined according to the spatial position information of the terminal device, so that when it is detected that the contact is included on the display interface, the target display position of the contact on the target virtual plane can be determined, the target control object is placed on the target virtual plane corresponding to the target display position, thus the corresponding effect video can be produced in the AR scene, and the interactivity between the user and the display interface is improved.

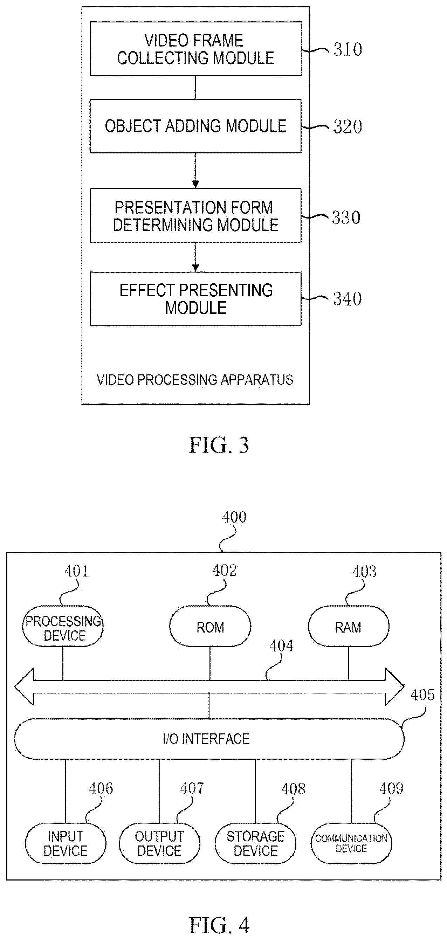

FIG. 3 is a schematic structural diagram illustrating an apparatus for video processing according to an embodiment of the present disclosure. The apparatus includes a video frame collecting module 310, an object adding module 320, a presentation form determining module 330, and an effect presenting module 340.

The video frame collecting module 310 is configured to sequentially collect to-be-processed video frames in response to an effect triggering operation; the object adding module 320 is configured to determine, in response to detecting a contact on a display interface, target display positions of the contact in the to-be-processed video frames, and add a target control object at the target display positions; a presentation form determining module 330, configured to sequentially determine presentation forms for the target control object in response to detecting that an effect play condition is satisfied; and an effect presenting module 340, configured to control the target control object to be presented in the to-be-processed video frames based on corresponding presentation forms.

According to the technical solution provided by the embodiment of the present disclosure, the to-be-processed video frame is sequentially collected in response to the effect triggering operation; and when it is detected that the user triggers the display interface, the target display position of the contact in the to-be-processed video frame can be determined, the target control object is added at the target display position. When it is detected that the effect play condition is satisfied, the presentation forms for the target control object can be determined sequentially, and the target control object is controlled to be presented in the to-be-processed video frames according to the corresponding presentation forms, thus the placement position of the target control object can be determined based on the triggering operation from the user, that is, the effect of interactivity between the user and the display interface is achieved. Further, on the basis of satisfying the effect play condition, the target control object can be controlled to be presented according to the corresponding presentation forms sequentially, and richness of the picture content is improved.

Based on the foregoing technical solution, the apparatus further includes a virtual plane creating module, configured to determinea target virtual plane located in the to-be-processed video based on obtained spatial position information of a terminal device, so as to add the target control object on the target virtual plane based on the contact.

**On** the basis of the foregoing technical solutions, the object adding module includes: a contact determining unit configured to determine the contact when detecting a triggering operation on the display interface; and a display position determining unit configured to determine the target display position based on the contact.

Based on the foregoing technical solutions, the apparatus further includes: a trajectory displaying module configured to display at least one to-be-selected trajectory; a first trajectory selecting module configured to take a to-be-selected trajectory that is finally triggered within a first predetermined duration as a target trajectory, and present a guidance map corresponding to the target trajectory on the display interface to determine a target display position of the target control object based on the guidance map; or, a trajectory removing module configured to, in response to that the at least one to-be-selected trajectory is not triggered within the first predetermined duration, remove the at least one to-be-selected trajectory from the to-be-processed video frames.

**On** the basis of the foregoing technical solutions, the apparatus further includes: a control object removing module, configured to remove the target control object from the to-be-processed video frames when it is detected that the triggering operation on the target control object satisfies a withdrawal condition, where the withdrawal condition includes at least one of an operation of clicking a withdrawal control, an operation of double-clicking the target control object, or an operation of long pressing the target control object.

**On** the basis of the foregoing technical solutions, the effect play condition includes: a duration for adding the target control object reaching a second predetermined duration; a control indicating that addition of the target control object is completed being triggered.

**On** the basis of the foregoing technical solutions, before sequentially determining the presentation forms for the target control object, the presentation form determining module includes: a first movement attribute determinating unit configured to determine a predetermined motion attribute corresponding to the target control object, so as to sequentially determine the presentation forms for the target control object based on the motion attribute; or, a second movement attribute determining unit configured to determine a sliding operation on the display interface, and determine a motion direction for the target control object based on the sliding operation, to sequentially determine the presentation forms for the target control object based on the motion direction.

Based on the foregoing technical solutions, the apparatus further includes: a starting control object determining module configured to determine target control object corresponding to the sliding operation, and take the target control object corresponding to the sliding operation as a starting control object for sequentially determining the presentation forms for the target control object.

**On** the basis of the foregoing technical solutions, the apparatus further includes: in response to taking one target control object in the target control objects as a starting control object, determining motion information and presentation forms for the one target control object based on a sliding operation on the starting control object; and determining, based on movement information and a movement direction of the one target control object, motion information and presentation forms of a next target control object adjacent to the one target control object, until the presentation forms of the plurality of target control object are sequentially determined; where the motion information comprises a motion speed, and the presentation form comprises an upright state or a tiled state.

Based on the foregoing technical solutions, the apparatus further includes: determining the motion information and the presentation forms for the next target control object adjacent to the target control object corresponding to the sliding operation based on the motion information and the motion direction of the target control object corresponding to the sliding operation includes: determining the motion information and corresponding presentation forms for the next target control object based on the motion information corresponding to the presentation forms of the target control object corresponding to the sliding operation, spacing information corresponding to the next target control object, and quality information of the next target control object.

Based on the foregoing technical solutions, the effect displaying module is configured to present the to-be-processed video frames as background information in a process of presenting the target control object according to the corresponding presentation forms.

The apparatus for effect processing provided by the embodiments of the present disclosure may perform the method for effect processing provided by any embodiment of the present disclosure, and has corresponding functional modules for implementing the method.

**It** should be noted that, a plurality of units and modules included in the foregoing apparatus are only divided according to function logic, but are not limited to the foregoing division, as long as a corresponding function can be implemented; in addition, names of the plurality of function units are merely used to facilitate mutual differentiation.

FIG. 4 is a schematic structural diagram of an electronic device according to an embodiment of the present disclosure. Referring to FIG. 4 below, it is a schematic structural diagram of an electronic device (such as the terminal device or server in FIG. 4) 400 suitable for implementing the embodiments of the present disclosure. The terminal device in the embodiments of the present disclosure may include, but is not limited to, a mobile terminal such as a mobile phone, a notebook computer, a digital broadcast receiver, a personal digital assistant (PDA), a tablet computer (PAD), a portable multimedia player (PMP), an in-vehicle terminal (for example, an in-vehicle navigation terminal), and a fixed terminal such as a digital television (TV), a desktop computer, or the like. The electronic device 400 shown in FIG. 4 is merely an example.

As shown in FIG. 4, the electronic device 400 may include a processing device (for example, a central processing unit, a graphics processor, etc.) 401, which may perform various appropriate actions and processing according to a program stored in a read-only memory (ROM) 402 or a program loaded into a random-access memory (RAM) 403 from a storage device 408. In the RAM 403, various programs and data required by operation of the electronic device 400 are also stored. The processing device 401, the ROM 402, and the RAM 403 are connected to each other through a bus 404. An input/output (I/O) interface 405 is also connected to the bus 404.

Typically, the following devices can be connected to I/O interface 405: input devices 406 including, for example, touch screens, touchpads, keyboards, mice, cameras, microphones, accelerometers, gyroscopes, etc.; output devices 407 including liquid crystal displays (LCDs), speakers, vibrators, etc.; storage devices 408 including magnetic tapes, hard disks, etc.; and a communication device 409. The communication device 409 may allow the electronic device 400 to communicate with other devices wirelessly or wirelessly to exchange data. Although FIG. 4 shows an electronic device 400 with a plurality of devices, it shall be understood that it is not required to implement or have all the devices shown. More or fewer devices can be implemented or provided instead.

According to an embodiment of the present disclosure, the process described above with reference to the flowchart can be implemented as a computer software program. For example, an embodiment of the present disclosure includes a computer program product that includes a computer program carried on a non-transitory computer-readable medium, where the computer program includes program code for performing the method shown in the flowchart. In such an embodiment, the computer program can be downloaded and installed from a network through the communication device 409, or installed from the storage device 408, or installed from the ROM 402. When the computer program is executed by the processing device 401, the above functions defined in the method of the embodiment of the present disclosure are performed.

The names of messages or information interaction between multiple devices in embodiments of the present disclosure are for illustrative purposes only.

The electronic device provided by the embodiments of the present disclosure and the method for video processing provided in the foregoing embodiments belong to the same inventive concept, and technical details not described in detail in this embodiment may refer to the foregoing embodiments.

An embodiment of the present disclosure provides a computer storage medium having a computer program stored thereon, the program, when executed by a processor, implements the method for video processing provided in the foregoing embodiments.

**It** should be noted that the computer-readable medium described above can be a computer-readable signal medium or a computer-readable storage medium, or any combination thereof. The computer-readable storage medium can be, for example, but not limited to, an electrical, magnetic, optical, electromagnetic, infrared, or semiconductor system, apparatus, or device, or any combination thereof. Examples of computer-readable storage media may include but are not limited to: an electrical connection with one or more wires, a portable computer disk, a hard disk, RAM (Random Access Memory), ROM (Read-Only Memory), an Erasable Programmable Read-Only Memory (EPROM) or flash memory, an optical fiber, a portable Compact Disk Read-Only Memory (CD-ROM), an optical storage device, a magnetic storage device, or any suitable combination thereof. In the present disclosure, a computer-readable storage medium may be any tangible medium containing or storing a program that can be used by an instruction execution system, apparatus, or device, or can be used in combination with an instruction execution system, apparatus, or device. In the present disclosure, a computer-readable signal medium can include a data signal propagated in baseband or as part of a carrier wave, which carries computer-readable program code therein. Such propagated data signals may take many forms, including but not limited to electromagnetic signals, optical signals, or any suitable combination thereof. A computer-readable signal medium may also be any computer-readable medium other than a computer-readable storage medium, which can send, propagate, or transmit programs for use by or in conjunction with instruction execution systems, apparatus, or devices. The program code contained on the computer-readable medium may be transmitted using any suitable medium, including but not limited to: wires, optical cables, radio frequency (RF), etc., or any suitable combination thereof.

**In** some embodiments, clients and servers can communicate using any currently known or future developed network protocol such as Hypertext Transfer Protocol (HTTP), and can be interconnected with any form or medium of digital data communication (such as communication networks). Examples of communication networks include Local Area Networks ("LANs"), Wide Area Networks ("WANs"), internetworks (such as the Internet), and end-to-end networks (such as ad hoc end-to-end networks), as well as any currently known or future developed networks.

The computer-readable medium can be included in the electronic device, or it can exist alone without being assembled into the electronic device.

The above-mentioned computer-readable medium carries one or more programs, and when the above-mentioned one or more programs are executed by the electronic device, the electronic device: in response to an effect triggering operation, sequentially collect to-be-processed video frames; in response to detecting a contact on a display interface, determine target display positions of the contact in the to-be-processed video frames, and add a target control object at the target display positions; in response to detecting that an effect play condition is satisfied, sequentially determine presentation forms for the target control object; and control the target control object to be presented in the to-be-processed video frames based on corresponding presentation forms.

Computer program codes for performing the operations of the present disclosure may be written in one or more programming languages or a combination thereof, including but not limited to Object Oriented programming languages - such as Java, Smalltalk, C++, and also conventional procedural programming languages - such as "C" or similar programming languages. The program code may be executed entirely on the user's computer, partially executed on the user's computer, executed as a standalone software package, partially executed on the user's computer and partially on a remote computer, or entirely on a remote computer or server. In the case of involving a remote computer, the remote computer may be any kind of network - including LAN (Local Area Network) or WAN (Wide Area Network) - connected to the user's computer, or may be connected to an external computer (e.g., through an Internet service provider to connect via the Internet).

The flowcharts and block diagrams in the accompanying drawings illustrate the architecture, functions, and operations of possible implementations of the system, method, and computer program product according to various embodiments of the present disclosure. In this regard, each block in a flowchart or block diagram may represent a module, program segment, or portion of code that contains one or more executable instructions for implementing a specified logical function. It should also be noted that in some alternative implementations, the functions marked in the blocks may occur in a different order than those marked in the drawings. For example, two consecutive blocks may actually be executed in parallel, or they may sometimes be executed in reverse order, depending on the function involved. It should also be noted that each block in the block diagrams and/or flowcharts, as well as combinations of blocks in the block diagrams and/or flowcharts, may be implemented using a dedicated hardware-based system that performs the specified function or operations, or may be implemented using a combination of dedicated hardware and computer instructions.

The units described in the embodiments of the present disclosure may be implemented by means of software or hardware. The name of the unit does not constitute a limitation on the unit itself in a certain case. For example, the first obtaining unit may also be described as "a unit for obtaining at least two Internet protocal addresses".

The functions described herein above can be performed at least in part by one or more hardware logic components. For example, without limitation, exemplary types of hardware logic components that may be used include: Field Programmable Gate Arrays (FPGAs), Application Specific Integrated Circuits (ASICs), Application Specific Standard Parts (ASSPs), System on Chip (SOCs), Complex Programmable Logic Devices (CPLDs), and so on.

**In** the context of this disclosure, a machine-readable medium can be a tangible medium that may contain or store programs for use by or in conjunction with instruction execution systems, apparatuses, or devices. A machine-readable medium may be a machine-readable signal medium or a machine-readable storage medium. A machine-readable medium may include, but are not limited to, electronic, magnetic, optical, electromagnetic, infrared, or semiconductor systems, apparatuses, or devices, or any suitable combination thereof. Specific examples of the machine-readable storage medium may include electrical connections based on one or more wires, portable computer disks, hard disks, RAM, ROM, EPROM or flash memory, optical fibers, CD-ROM, optical storage devices, magnetic storage devices, or any suitable combination thereof.

The above description is only embodiments of this disclosure and an explanation of the technical principles used. Those skilled in the art should understand that the scope of the disclosure involved in this disclosure is not limited to technical solutions composed of specific combinations of the above technical features, but should also covers other technical solutions formed by arbitrary combinations of the above technical features or their equivalent features without departing from the above disclosure concept. For example, technical solutions formed by replacing the above features with (but not limited to) technical features with similar functions disclosed in this disclosure.

**In** addition, although a plurality of operations are depicted in a specific order, this should not be understood as requiring these operations to be performed in the specific order shown or in a sequential order. In certain environments, multitasking and parallel processing may be advantageous. Similarly, although a plurality of implementation details are included in the above discussion, these should not be construed as limiting the scope of the present disclosure. Some features described in the context of individual embodiments can also be implemented in combination in a single embodiment. Conversely, a plurality of features described in the context of a single embodiment can also be implemented in a plurality of embodiments separately or in any suitable sub-combination.

## Claims

1. A method for video processing, comprising:
in response to an effect triggering operation, sequentially collecting to-be-processed video frames;
in response to detecting a contact on a display interface, determining target display positions of the contact in the to-be-processed video frames, and adding a target control object at the target display positions;
in response to detecting that an effect play condition is satisfied, sequentially determining presentation forms for the target control object; and
controlling the target control object to be presented in the to-be-processed video frames based on corresponding presentation forms.

2. The method of claim 1, further comprising:
determining a target virtual plane located in the to-be-processed video based on obtained spatial position information of a terminal device, so as to add the target control object on the target virtual plane based on the contact.

3. The method of claim 1, wherein determining the target display positions of the contact in the to-be-processed video frames comprises:
in response to detecting a triggering operation on the display interface, determining the contact; and
determining the target display positions based on the contact.

4. The method of claim 1, further comprising: in a process of sequentially collecting to-be-processed video frames,
displaying at least one to-be-selected trajectory; and
taking a to-be-selected trajectory that is finally triggered within a first predetermined duration as a target trajectory, and presenting a guidance map corresponding to the target trajectory on the display interface to determine a target display position of the target control object based on the guidance map; or in response to that the at least one to-be-selected trajectory is not triggered within the first predetermined duration, removing the at least one to-be-selected trajectory from the to-be-processed video frames.

5. The method of claim 1, further comprising:
in response to detecting that the triggering operation on the target control object satisfies a withdrawal condition, removing the target control object from the to-be-processed video frames;
wherein the withdrawal condition comprises at least one of an operation of clicking a withdrawal control, an operation of double-clicking the target control object, or an operation of long pressing the target control object.

6. The method of claim 1, wherein the effect play condition comprises at least one of the following:
a duration for adding the target control object reaching a second predetermined duration;
a control indicating that addition of the target control object is completed being triggered.

7. The method of claim 1, further comprising: before sequentially determining the presentation forms for the target control object,
determining a predetermined motion attribute corresponding to the target control object, so as to sequentially determine the presentation forms for the target control object based on the motion attribute; or
determining a sliding operation on the display interface, and determining a motion direction for the target control object based on the sliding operation, to sequentially determine the presentation forms for the target control object based on the motion direction.

8. The method of claim 7, further comprising:
determining a target control object corresponding to the sliding operation, and taking the target control object corresponding to the sliding operation as a starting control object for sequentially determining the presentation forms for the target control object.

9. The method of claim 1, wherein there are a plurality of target control objects, and sequentially determining the presentation forms for the target control object comprises:
in response to taking one target control object in the target control objects as a starting control object, determining motion information and presentation forms for the one target control object based on a sliding operation on the starting control object; and determining, based on movement information and a movement direction of the one target control object, motion information and presentation forms of a next target control object adjacent to the one target control object, until the presentation forms of the plurality of target control object are sequentially determined; and
wherein the motion information comprises a motion speed, and the presentation form comprises an upright state or a tiled state.

10. The method of claim 9, wherein determining the motion information and the presentation forms for the next target control object adjacent to the target control object corresponding to the sliding operation based on the motion information and the motion direction of the target control object corresponding to the sliding operation comprises:
determining the motion information and corresponding presentation forms for the next target control object based on the motion information corresponding to the presentation forms of the target control object corresponding to the sliding operation, spacing information corresponding to the next target control object, and quality information of the next target control object.

11. The method of claim 1, wherein controlling the target control object to be presented in the to-be-processed video frames according to the corresponding presentation forms comprises:
presenting the to-be-processed video frames as background information in a process of presenting the target control object according to the corresponding presentation forms.

12. An apparatus for video processing, comprising:
a video frame collecting module configured to sequentially collect to-be-processed video frames in response to an effect triggering operation;
an object adding module configured to determine, in response to detecting a contact on a display interface, target display positions of the contact in the to-be-processed video frames, and add a target control object at the target display positions;
a presentation form determining module configured to sequentially determine presentation forms for the target control object in response to detecting that an effect play condition is satisfied; and
an effect presenting module configured to control the target control object to be presented in the to-be-processed video frames based on corresponding presentation forms.

13. An electronic device, comprising:
at least one processor;
a storage device configured to store at least one program, and
when executed by the at least one processor, the at least one program causes the at least one processor to implement the method for video processing of any one of claims 1-11.

14. A storage medium comprising computer executable instructions, the computer executable instructions are configured to implement the method for video processing of any one of claims 1-11, when executed by a computer processor.
